**Europäisches Patentamt**

**European Patent Office**

**Office européen des brevets**

(19)

(11) Veröffentlichungsnummer: **0 134 506 B1**

(12) # EUROPÄISCHE PATENTSCHRIFT

(45) Veröffentlichungstag der Patentschrift:
22.03.89

(51) Int. Cl.⁴: **C 01 B 31/28**

(21) Anmeldenummer: **84108290.2**

(22) Anmeldetag: **14.07.84**

(54) Verfahren zur Herstellung von Phosgen unter gleichzeitiger Erzeugung von Dampf.

(30) Priorität: **28.07.83 DE 3327274**

(43) Veröffentlichungstag der Anmeldung:
**20.03.85 Patentblatt 85/12**

(45) Bekanntmachung des Hinweises auf die Patenterteilung:
**22.03.89 Patentblatt 89/12**

(84) Benannte Vertragsstaaten:
**BE DE FR GB IT NL**

(56) Entgegenhaltungen:
**EP-A- 0 003 530**
**DE-A- 2 600 387**
**FR-A- 2 109 186**

(73) Patentinhaber: **BAYER AG, Konzernverwaltung RP Patentabteilung, D-5090 Leverkusen 1 Bayerwerk (DE)**

(72) Erfinder: **Sauer, Heinz, Hubert-Drecker-Strasse 14, D-5068 Odenthal (DE)**
Erfinder: **Porkert, Helmut F., Dr., Mobay Chemical Corp. West Bay Road, Baytown, TX 77520 (US)**
Erfinder: **Liebsch, Dietrich, Dr., Nietzschestrasse 11, D-5090 Leverkusen 1 (DE)**

**Beschreibung**

Die Erfindung betrifft ein neues Verfahren zur Herstellung von Phosgen durch Umsetzung von Chlor mit Kohlenmonoxid in Gegenwart von Aktivkohle als Katalysator unter gleichzeitiger Erzeugung von Dampf.

Phosgen wird in technischem Maßstab überwiegend durch Umsetzung von Chlor mit CO an Aktivkohle bei leicht erhöhter Temperatur hergestellt (40–100 °C). Um den Chlorgehalt des so erzeugten Phosgens, das bei praktisch allen Verwendungsmöglichkeiten dieses Zwischenproduktes stört, so niedrig wie möglich zu halten, arbeitet man mit einem CO-Überschuß von 3–10% der stöchiometrisch nötigen Menge. Ferner muß die erhebliche positive Bildungsenthalpie von 108 kJ/mol durch intensive Kühlung abgeführt werden, da die Synthese bei Temperaturen über 100 °C nicht vollständig abläuft (vgl. z. B. Ullmanns Encyklopädie der technischen Chemie, 4. Auflage (1979), 18, Seiten 277–278).

Auf Grund der gemessenen Dissoziationsgleichgewichte enthält Phosgen bei 100 °C bereits ca. 50 ppm Chlor. Für viele Anwendungsgebiete stellt ein solcher Chlorgehalt bereits die Obergrenze der Spezifikation dar. Bei 200 °C sind bereits 0,4%, bei 300 °C 5% und bei 400 °C 20% des Phosgens in Kohlenoxid und Chlor dissoziiert. Deshalb sind alle bekannten Verfahren dadurch gekennzeichnet, daß sie in mit Aktivkohle gefüllten Röhrenreaktoren ablaufen, in denen durch direkte Kühlung mit Wasser, durch indirekte Kühlung mit inerten Kälteträgern oder durch Verdampfungskühlung eine schnelle Abführung der Reaktionswärme möglich ist, so daß die Reaktionsgase beim Austritt aus dem Reaktor eine Temperatur von 100 °C nicht wesentlich überschreiten. Die sorgfältige Kühlung der Reaktionsrohre ist aus Gründen der Betriebssicherheit auch deshalb von großer Bedeutung, da der normale Baustahl der Reaktoren bei Temperaturen über 170 °C unter Bildung von Eisenchlorid heftig reagiert.

Bei den üblichen Verfahrensbedingungen eignet sich als Katalysator praktisch jede gute Aktivkohle mit großer Adsorptionskapazität. Die Kühlmitteltemperaturen liegen nach Durchgang durch den Reaktor deutlich unter 100 °C (im allgemeinen bei 50–70 °C), so daß pro Tonne Phosgen eine Energiemenge von 1,09 × 10$^9$ Joule nicht befriedigend genutzt werden kann.

Die EP-A1-0 003 530 erwähnt zwar beiläufig, daß bei der Herstellung von Phosgen aus Chlor und Kohlenmonoxid der Reaktor mit siedendem Wasser gekühlt werden könne, um so Dampf herzustellen, jedoch werden diesbezüglich keine näheren Angaben gemacht. Die Erzeugung von Hochdruckdampf ist nach dem Verfahren der Vorveröffentlichung offensichtlich nicht möglich, da ausdrücklich betont wird, daß das Reaktionsprodukt unmittelbar nach der Phosgenbildung, d. h. noch im Phosgenreaktor so stark abgekühlt werden muß, daß eine nennenswerte Spaltung des gebildeten Phosgens nicht stattfindet. Dies bedeutet jedoch nichts anderes, als daß die Temperatur des Kühlmittels nicht wesentlich oberhalb 100 °C liegen kann, so daß die Erzeugung von Hochdruckdampf ausgeschlossen ist.

Es wurde nun gefunden, daß man die Nachteile des Standes der Technik überwinden und die großtechnische Phosgensynthese in einer Weise durchführen kann, daß die Bildungsenthalpie des Phosgens zur Erzeugung von Dampf, insbesondere Hochdruckdampf des Druckbereichs 5–50, vorzugsweise 20–35 bar nutzbar wird.

Gegenstand der Erfindung ist ein Verfahren zur Herstellung von Phosgen durch Umsetzung von Chlor mit Kohlenmonoxid in, Aktivkohle als Katalysator enthaltenden Rohrreaktoren unter gleichzeitiger Nutzung der anfallenden Reaktionswärme zur Erzeugung von Dampf und unter Beendigung der Umsetzung in einem nachgeschalteten, gekörnte Aktivkohle enthaltenden, bei niedrigerer Temperatur betriebenen Reaktor, so daß das den nachgeschalteten Reaktor verlassende Phosgen einen Restchlorgehalt von unter 50 ppm (Volumen) aufweist, dadurch gekennzeichnet, daß man

a) in einem ersten, gekörnte Aktivkohle enthaltenden Rohrreaktor (4), dessen Rohre einen lichten Durchmesser von maximal 100 mm aufweisen, von 95 bis 98% des eingesetzten Chlors mit überschüssigem Kohlenmonoxid bei Reaktionstemperaturen von über 250 °C zu Phosgen umsetzt,

b) die hierbei anfallende Reaktionswärme durch Verdampfungskühlung einer bei 150 bis 320 °C siedenden Flüssigkeit oder mit einer nicht siedenden Flüssigkeit abführt, deren Temperatur am Reaktoraustritt mittels Zwangsumlaufpumpen und Temperatursteuerung bei 150–320 °C gehalten wird,

c) den den Reaktor verlassenden, flüssigen oder dampfförmigen Wärmeträger in einem mit Wasser als Kühlmedium beschickten Wärmeaustauscher unter Erzeugung von Dampf kondensiert und/oder auf eine bis zu 50 °C unter der Temperatur des Wärmeträgers am Reaktoraustritt liegende Temperatur abkühlt und in den Reaktor (4) zurückführt,

d) die den Reaktor (4) verlassenden Reaktionsgase auf eine Temperatur zwischen 50 und 120 °C abkühlt und

e) in den nachgeschalteten zweiten Reaktor (6) leitet, dessen Temperatur auf 50 bis 100 °C thermostatisiert wird.

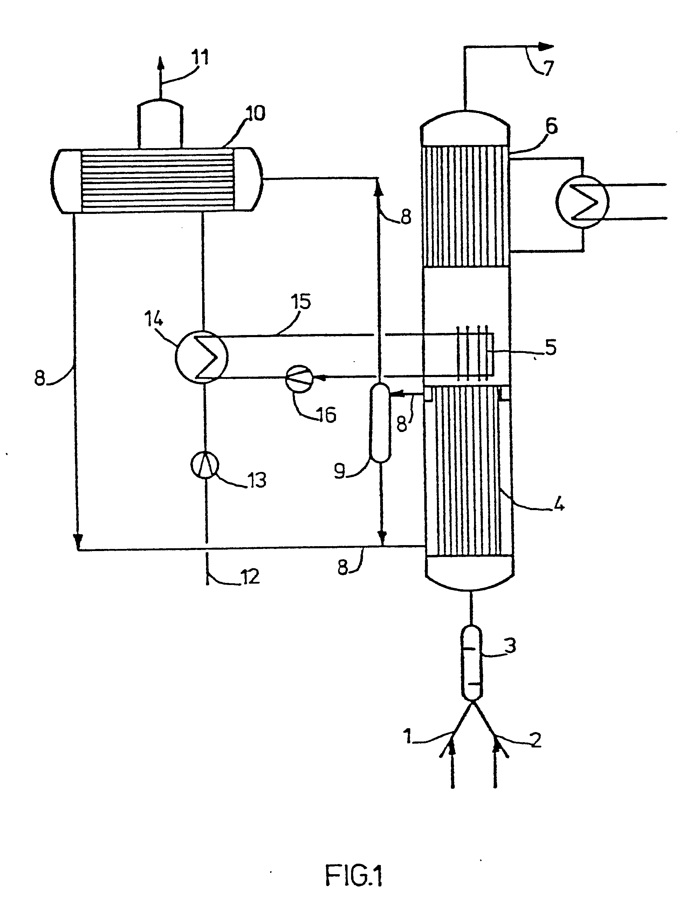

Zur Durchführung des erfindungsgemäßen Verfahrens ist beispielsweise die aus der Zeichnung ersichtliche Anlage geeignet.

In dieser Zeichnung bedeuten im einzelnen

(1) Die Einspeisstelle für Kohlenmonoxid;

(2) die Einspeisstelle für Chlor;

(3) eine Gasmischkammer;

(4) einen ersten Rohrreaktor in Form eines Rohrbündelwärmeaustauschers;

(5) einen Kühler;

(6) einen zweiten Rohrreaktor in Form eines Rohrbündelwärmeaustauschers mit Kühl- bzw. Heizmittelkreislauf;

(7) die Phosgen-Entnahmestelle;

(8) einen Wärmeträgerkreislauf;

(9) einen Flüssigkeitsabscheider;

(10) einen Wärmeaustauscher (Dampferzeuger);
(11) die Dampf-Entnahmestelle;
(12) die Wasser-Einspeisstelle;
(13) eine Wasserpumpe;
(14) einen Wärmeaustauscher;
(15) ein Kühlmittelkreislauf und
(16) eine Kühlmittelpumpe.

Bei der Durchführung des erfindungsgemäßen Verfahrens wird vorzugsweise die in der Zeichnung schematisch dargestellte Apparatur verwendet, was jedoch nicht bedeuten soll, daß nicht auch solche Apparaturen verwendet werden können, die in unwesentlichen Punkten von der nur beispielhaft gedachten Darstellung abweichen. So können beispielsweise anstelle des in der Zeichnung dargestellten Kombinationsreaktors getrennte, hintereinandergeschaltete Reaktoren eingesetzt werden, wobei als 2. Reaktor anstelle eines Rohrreaktors auch eine Aktivkohleschüttung ausreichender Höhe verwendet werden kann. Ferner ist es selbstverständlich nicht erfindungswesentlich, die bei der Kühlung der den ersten Reaktor verlassenden Gase anfallende Wärme zur Vorheizung des, in den Wärmeaustauscher (10) einzuspeisenden Wassers zu benutzen.

Der 1. Reaktor (4) besteht vorzugsweise aus einem Rohrbündelwärmeaustauscher, dessen Rohre einen lichten Durchmesser von maximal 100 mm, vorzugsweise maximal 50 mm und besonders bevorzugt maximal 30 mm aufweisen.

Die Länge der Rohre ist nicht kritisch und liegt im allgemeinen zwischen 1 und 5 m. Längere Rohre sind allerdings bevorzugt, da die Hauptreaktionszone sich in dem Maße verlagert, wie der Katalysator durch Staub und andere Verunreinigungen der Ausgangsprodukte desaktiviert wird. Sie gestatten eine längere Betriebsdauer ohne Katalysatorwechsel. Die Reaktionsrohre bestehen vorzugsweise aus einem, bei den Reaktionstemperaturen gegenüber Chlor resistenten Metall, vorzugsweise werden Rohre aus Nickel oder auch hochlegiertem Chrom-Nickel- bzw. Chrom-Nickel-Molybdänstahl eingesetzt.

Die Rohre des 1. Reaktors sind mit Aktivkohle einer Körnung von ca. 3 bis 10, vorzugsweise 3,5 bis 7 mm gefüllt. Als Aktivkohle kommen insbesondere solche Typen in Betracht, die eine Druckhärte von mehr als 18 kp (bestimmt gemäß der Methode in DE-AS-2 322 706, Kolonne 6, Zeilen 28–38) und ein Benzol-Aufnahmevermögen von über 40 Gew.-% aufweisen. Gut geeignet sind beispielsweise die, diesen Bedingungen entsprechenden, bruch- und abriebfesten Aktivkohlen hoher Temperaturstandfestigkeit gemäß DE-AS-2 322 706.

Als 2. Reaktor (6) kann ein Phosgenreaktor herkömmlicher Bauart benutzt werden, der über einen Wärmeaustauscher vorzugsweise auf Temperaturen zwischen 50 und 100 °C, besonders bevorzugt zwischen 70 und 100 °C thermostatisiert wird. Wegen der geringen, der Restumsetzung entsprechenden Wärmetönung kann jedoch statt eines Rohrreaktors herkömmlicher Bauart auch eine Aktivkohle-Schüttung ausreichender Höhe als Nachreaktor verwendet werden. Die Art der im 2.

Reaktor verwendeten Aktivkohle ist selbstverständlich weit weniger kritisch als im Falle des 1. Reaktors. Es können grundsätzlich alle beliebigen, bislang bei der Phosgensynthese verwendeten Aktivkohle-Typen eingesetzt werden. Selbstverständlich ist es auch möglich, auch den 2. Reaktor mit Aktivkohle der oben beschriebenen Art zu beschicken.

Die Kühlung des 1. Reaktors (4) erfolgt vorzugsweise nach dem Prinzip der Verdampfungskühlung, wobei der Wärmeträgerkreislauf entweder drucklos und über einen Nachkühler (nicht gezeichnet) frei belüftet sein kann oder über Druckhaltungen auf einen angemessenen Vordruck bis z. B. 10 bar eingestellt werden kann, wodurch die Siedetemperatur des Wärmeträgers und damit die Kühltemperatur des Reaktors variiert werden kann. Geeignete Wärmeträger sind beispielsweise Dekalin, Diphenylmethan, Chloraromaten wie z. B. o-Dichlorbenzol oder geeignete Mineralölfraktionen. Grundsätzlich ist es auch möglich, die Wärmeübertragung unter solchen Druckbedingungen des Wärmeträgers durchzuführen, daß eine Verdampfung des Wärmeträgers nicht stattfindet, bzw. solche Flüssigkeiten als Wärmeträger zu verwenden, die auch bei Normaldruck bei der Austrittstemperatur des Wärmeträgers aus dem 1. Reaktor nicht sieden. In diesem, allerdings weniger bevorzugten Fall erfolgt die Einstellung der Temperatur des Wärmeträgers am Reaktorausgang durch Zwangsumlaufpumpen und Temperatursteuerung. Die Austrittstemperatur des den 1. Reaktor flüssig und vorzugsweise dampfförmig verlassenden Wärmeträgers liegt bei 150 bis 320 °C, vorzugsweise 200 bis 300 °C.

Bei dem Kühler (5) handelt es sich um einen üblichen Wärmeaustauscher, beispielsweise einen Rippenrohrwärmeaustauscher für dessen Kühlung vorzugsweise Wasser verwendet wird. Die dem Reaktor über den Kühler (5) entzogene Wärme kann, wie in der Zeichnung dargestellt, im Wärmeaustauscher (14) zur Vorerwärmung des Speisewassers des Wärmeaustauschers (10) genutzt werden. Es wäre jedoch auch denkbar, die im Wärmeaustauscher (5) anfallende Wärme zur Vorerhitzung des Kohlenmonoxids und/oder Chlors zu nutzen.

Bei dem Wärmeaustauscher (10) handelt es sich ebenfalls um einen Wärmeaustauscher der üblichen Bauart; beispielsweise kann auch hier ein Rohrbündelwärmeaustauscher Verwendung finden.

Die für das erfindungsgemäße Verfahren eingesetzten Ausgangsprodukte, Kohlenmonoxid und Chlor müssen trocken und in ausreichender Reinheit zur Verfügung stehen, um unerwünschte Nebenreaktionen und eine vorzeitige Entaktivierung des Katalysators zu vermeiden. Im allgemeinen weist das zum Einsatz gelangende technische Kohlenoxid einen CO-Gehalt von mindestens 97 Vo.% und das zum Einsatz gelangende technische Chlor einen $Cl_2$-Gehalt von mindestens 97 Vol.-% auf. Geringere Konzentrationen sind im Prinzip möglich, würden jedoch zu einer hohen Inertgasbelastung führen. Typische Produktspezifikationen, die das Verfahren jedoch in keiner Weise begrenzen sollen, lauten wie folgt:

|  | Kohlenoxid | Chlor |
|---|---|---|
| Gehalt | 97,0% min. | 97,0% min. |
| Wasserstoff | 1,5% max. | 0,5% max. |
| Sauerstoff | 0,1% max. | 0,3% max. |
| Schwefel-verbindungen | 0,1% max. | – |
| Stickstoff | 1,0% max. | 2,0% max. |

(%-Angaben in Volumenprozent).

Bei der Durchführung des erfindungsgemäßen Verfahrens kommt das Kohlenmonoxid im allgemeinen in einem leichten molaren Überschuß, bezogen auf das Chlor, beispielsweise unter Einhaltung eines Molverhältnisses von 1,03 : 1 bis 1,1 : 1 zum Einsatz. Die Gase werden über einen Gasmengenzähler (nicht gezeichnet) in die Mischkammer (3) geleitet und von dort in den ersten Reaktor (4) geleitet. Der Druck des Gasgemischs liegt hierbei im allgemeinen bei 1 bis 5 bar; die Temperatur am Eingang des ersten Reaktors (4) liegt im allgemeinen bei 20 bis 120°C, vorzugsweise 80 bis 100°C. Der Durchsatz durch den Reaktor wird vorzugsweise so gewählt, daß zur Herstellung von 1000 kg Phosgen pro Stunde eine Wärmeaustauscherfläche im 1. Reaktor von ca. 50–150, vorzugsweise 80–120 m² und eine Menge an Aktivkohle von 250–750, vorzugsweise 400–600 l zur Verfügung steht. Diese Bereiche sind jedoch nicht kritisch. Über- oder Unterschreitungen sind oft ohne wesentliche Beeinträchtigung der Reaktion möglich und können durch die Verdampfungsgeschwindigkeit des Wärmeträgers ausgeglichen werden.

Die Reaktionsgase, in denen das eingesetzte Chlor zu mindestens 95%, im allgemeinen zu 95–98% in Form von Phosgen vorliegt, verlassen den 1. Reaktor mit einer nur geringfügig (ca. 5–30°C) über dem Siedepunkt des Kühlmittels bzw. über der Austrittstemperatur des nichtsiedenden Kühlmittels liegenden Temperatur. Sie passieren den Kühler (5) und werden dort auf eine Temperatur von 50 bis 120°C, vorzugsweise 70 bis 110°C abgekühlt, bevor sie in den zweiten Reaktor (6) eintreten. Im zweiten Reaktor wird die Umsetzung bei einer Temperatur zwischen 50 und 100°C, vorzugsweise 70–100°C zu Ende geführt. Hierbei stellt sich das Dissoziationsgleichgewicht dieses Temperaturbereichs ein, solange Temperaturen von 50°C nicht unterschritten werden. Das den 2. Reaktor verlassende Gasgemisch enthält, je nach Druck und Temperatur im 2. Reaktor, eine Restmenge an Chlor von weniger als 50 ppm (Volumen) und ist für weitere Umsetzungen direkt oder nach Abtrennung von noch vorliegendem Kohlenoxid und der inerten Restgase verwendbar.

Während der Durchführung des erfindungsgemäßen Verfahrens wird die im ersten Reaktor anfallende Reaktionswärme, wie bereits oben ausgeführt, mittels eines unter den gegebenen Druckbedingungen bei 150–320°C, vorzugsweise 200 bis 300°C siedenden Wärmeträgers oder mittels eines nicht-siedenden, durch Zwangsumlauf und Temperatursteuerung am Reaktorausgang innerhalb dieses Temperaturbereichs gehaltenen Wärmeträgers abgeführt. Die Dämpfe des Wärmeträgers werden über einen Flüssigkeitsabscheider (9), flüssige Wärmeträger direkt in den Wärmeaustauscher (10) geleitet, in welchem unter Kondensation und/oder Abkühlung des Wärmeträgers auf eine im allgemeinen bis zu 50°C unter der Austrittstemperatur des Wärmeträgers aus dem 1. Reaktor liegende Temperatur Dampf des Druckbereichs 5 bis 50, vorzugsweise 20 bis 35 bar erzeugt wird. Der den Wärmeaustauscher (10) verlassende Wärmeträger wird über (8) im Kreislauf zum ersten Reaktor zurückgeführt. Der entstandene Dampf wird über (11) dem Dampfverbraucher zugeführt. Gleichzeitig wird dem Wärmeaustauscher (10) über die Rohrleitung (12) eine der Dampfmenge entsprechende Wassermenge zugeführt, die, wie oben beschrieben, gegebenenfalls im Wärmeaustauscher (14), gegebenenfalls unter Druck auf bis zu 160°C vorerwärmt wird.

Das erfindungsgemäße Verfahren gestattet erstmals die großtechnische Herstellung von Phosgen aus Chlor und Kohlenmonoxid unter optimaler Nutzung der bei dieser Umsetzung freigesetzten Wärmeenergie. Ein weiterer Vorteil des erfindungsgemäßen Verfahrens ist in dem Umstand zu sehen, daß die zur Anwendung gelangende hohe Reaktionstemperatur im 1. Reaktor einen positiven Einfluß auf die Lebensdauer der eingesetzten Aktivkohlen hat. Diese liegt bei den Bedingungen der erfindungsgemäßen Hochtemperatursynthese um ein Mehrfaches über der Lebensdauer der bei dem konventionellen Verfahren eingesetzten Aktivkohle, da die durch Chlorierung von Kohlenwasserstoffspuren im Ausgangsgemisch entstehenden Nebenprodukte unter den erfindungsgemäßen Bedingungen nicht mehr vom Katalysator absorbiert werden.

Das nachfolgende Beispiel dient zur näheren Erläuterung des erfindungsgemäßen Verfahrens, ohne dieses jedoch zu begrenzen. Alle Prozentangaben beziehen sich auf Volumenprozente.

Beispiel (vgl. Zeichnung)

Der zum Einsatz gelangende 1. Reaktor (4) ist ein Rohrbündelwärmeaustauscher auch Chromnickelstahl der Type 1.4571 (DIN 17 007), mit 415 parallel angeordneten Rohren einer Länge von 1,5 m und einem Durchmesser von 32/25 mm. Die Rohre des Reaktors sind mit Aktivkohle gemäß Beispiel 1 der DE-AS-2 322 706 gefüllt und an beiden Enden mit geeigneten Edelstahlnetzen verschlossen. Der gefüllte Reaktor wird vor der Inbetriebnahme mit trockenem, 150°C heißen Stickstoff ausgeblasen bis keine Restfeuchte mehr nachweisbar ist. In diesen Reaktor wird von unten ein Mischgas bestehend aus 100 Nm³/h Chlor (Zusammensetzung: 97,5% Chlor; 0,2% Wasserstoff; 0,9% Kohlendioxid, 1,1% Stickstoff; 0,3% Sauerstoff) und 105 Nm³/h Kohlenmonoxid (Zusammensetzung: 98,5% CO; 1,1% Wasserstoff; 0,2% Kohlendioxid; 0,2% sonstige Verunreinigungen) eingespeist, welches auf ca. 80–100°C vorgewärmt wurde. Die Phosgenbildungsreaktion kommt sofort bei der Berührung des Mischgases mit der Aktivkohle in Gang. Die entstehende Reaktionswärme wird mittels siedendem, unter Normaldruck befindlichem Dibenzylbenzol (Siedepunkt: ca. 280°C) durch Verdampfungskühlung abgeführt.

Die Dämpfe dieses Wärmeträgers werden nach passieren eines Flüssigkeitsabscheiders (9) im Wärmeaustauscher (10) kondensiert. Die hierbei freiwerdende Wärme dient zur Erzeugung von 0,18 t/h Dampf eines Drucks von 32 bar aus, unter Druck auf 150°C vorerwärmtem und entsalztem Kesselspeisewasser.

Das den 1. Reaktor mit einer Temperatur von ca. 280–300°C verlassende Reaktionsgas, in dem ca. 97–98% des ursprünglich eingesetzten Chlors in Form von Phosgen vorliegt, wird in einem Rippenrohrwärmeaustauscher (5) auf ca. 105°C abgekühlt und dem zweiten Reaktor (6), bestehend aus einem mit Aktivkohle gefüllten Rohrbündelreaktor konventioneller Bauart, zugeführt.

Der 2. Reaktor wird durch Thermostatisierung so betrieben, daß eine Temperatur zwischen 70 und 100°C eingehalten wird, um die Gleichgewichtseinstellung des Phosgens zu gewährleisten. Das den 2. Reaktor über (7) verlassende Phosgen enthält Chlor in einer Konzentration von < 50 ppm (Volumen) und ist für weitere Umsetzungen direkt oder nach Abtrennung des überschüssigen Kohlenoxids und der interten Restgase verwendbar.

Die genannte Vorerwärmung des Kesselspeisewassers erfolgt im Wärmeaustauscher (14) unter Nutzung der im Kühler (5) gewonnenen Wärme.

**Patentansprüche**

1. Verfahren zur Herstellung von Phosgen durch Umsetzung von Chlor mit Kohlenmonoxid in Aktivkohle als Katalysator enthaltenden Rohrreaktoren unter gleichzeitiger Nutzung der anfallenden Reaktionswärme zur Erzeugung von Dampf und unter Beendigung der Umsetzung in einem nachgeschalteten, gekörnte Aktivkohle enthaltenden, bei niedrigerer Temperatur betriebenen Reaktor, so daß das den nachgeschalteten Reaktor verlassende Phosgen einen Restchlorgehalt von unter 50 ppm (Volumen) aufweist, dadurch gekennzeichnet, daß man

a) in einem ersten, gekörnte Aktivkohle enthaltenden Rohrreaktor (4), dessen Rohre einen lichten Durchmesser von maximal 100 mm aufweisen, von 95 bis 98% des eingesetzten Chlors mit überschüssigem Kohlenmonoxid bei Reaktionstemperaturen von über 250°C zu Phosgen umsetzt,

b) die hierbei anfallende Reaktionswärme durch Verdampfungskühlung einer bei 150 bis 320°C siedenden Flüssigkeit oder mit einer nicht siedenden Flüssigkeit abführt, deren Temperatur am Reaktoraustritt mittels Zwangsumlaufpumpen und Temperatursteuerung bei 150–320°C gehalten wird,

c) den den Reaktor verlassenden, flüssigen oder dampfförmigen Wärmeträger in einem mit Wasser als Kühlmedium beschickten Wärmeaustauscher unter Erzeugung von Dampf kondensiert und/oder auf eine bis zu 50°C unter der Temperatur des Wärmeträgers am Reaktoraustritt liegende Temperatur abkühlt und in den Reaktor (4) zurückführt,

d) die den Reaktor (4) verlassenden Reaktionsgase auf eine Temperatur zwischen 50 und 120°C abkühlt und

e) in den nachgeschalteten zweiten Reaktor (6) leitet, dessen Temperatur auf 50 bis 100°C thermostatisiert wird.

2. Verfahren gemäß Anspruch 1, dadurch gekennzeichnet, daß man die bei der Kühlung der den ersten Reaktor (4) verlassenden Reaktionsgase anfallende Wärmemenge zur Vorwärmung des in den Wärmeaustauscher (10) einzuleitenden Speisewassers nutzt.

**Claims**

1. Process for the preparation of phosgene by the reaction of chlorine with carbon monoxide in tubular reactors containing active charcoal as catalyst with concomitant utilization of the resulting heat fo reaction for the generation of steam and with termination of the reaction in a reactor which is connected downstream of the first reactor, is operated at a lower temperature and contains granular active charcoal, so that the phosgene leaving the downstream reactor has a residual chlorine content of less than 50 ppm (by volume), characterised in that

a) from 95 to 98% of the chlorine put into the process is reacted with carbon monoxide at reaction temperatures above 250°C to produce phosgene in a first tubular reactor (4) containing granular active charcoal and having tubes with an internal diameter of at the most 100 mm,

b) the heat of reaction produced in the said reaction is removed by evaporation cooling of a liquid which boils at 150 to 320°C or by means of a non-boiling liquid whose temperature is maintained at from 150–320°C at the outlet of the reactor by means of forced circulation pumps and temperature control,

c) the liquid or gaseous heat carrier leaving the reactor is condensed in a heat exchanger supplied with water as cooling medium so that steam is produced and/or said heat carrier is cooled to a temperature which is up to 50 degrees Centigrade below the temperature of the heat carrier at the outlet of the reactor, and is returned to the reactor,

d) the reaction gases leaving the reactor (4) are cooled to a temperature of from 50 to 120°C and

e) are transferred to the downstream second reactor (6) the temperature of which is thermostatically maintained at from 50 to 100°C.

2. Process according to claim 1, charaterised in that the quantity of heat obtained from cooling the reaction gases leaving the first reactor (4) is utilized for preheating the feed water to be introduced into the heat exchanger (10).

**Revendications**

1. Procédé de fabrication de phosgène par réaction du chlore avec le monoxyde de carbone dans des réacteurs tubulaires contenant du charbon actif comme catalyseur, avec exploitation simultanée de la chaleur réactionnelle présente pour produire de la vapeur, la réaction étant terminée dans un réacteur couplé en série, contenant des granulats de charbon actif, exploité à plus basse température, de sorte que le phosgène sortant du réacteur couplé en série présente une teneur restante de chlore inférieure à 50 ppm (en volume), caractérisé en ce que

a) on fait réagir, dans un premier réacteur tubulaire (4) contenant des granulats de charbon actif, dont les tubulures présentent un diamètre intérieur maximal de 100 mm, 95 à 98% du chlore présent avec un excédant de monoxyde de carbone à des températures de réaction de plus de 250°C, pour fabriquer du phosgène,

b) on évacue la chaleur réactionnelle présente par refroidissement par vaporisation d'un liquide en ébullition ou non en ébullition à une température de 150 à 320°C, dont la température à la sortie du réacteur est maintenue à 150–320°C au moyen de pompes à circulation forcée et d'un dispositif de commande de température,

c) on condense l'agent caloporteur sortant du réacteur sous forme liquide ou sous forme de vapeur dans un échangeur de chaleur chargé d'eau, faisant office de réfrigérant, avec production de vapeur et/ou on le refroidit à une température située jusqu'à 50°C en-dessous de la température de l'agent caloporteur à la sortie du réacteur et on le réinjecte dans le réacteur (4),

d) on refroidit les gaz réactionnels sortant du réacteur (4) à une température située entre 50 et 120°C et

e) on les achemine dans le second réacteur couplé en série (6), dont la température est maintenue par thermostat dans une plage de 50 à 100°C.

2. Procédé selon la revendication 1 caractérisé en ce qu'on exploite la quantité de chaleur produite lors du refroidissement des gaz réactionnels sortant du premier réacteur (4) pour pré-chauffer l'eau d'alimentation destinée à alimenter l'échangeur de chaleur (10).

FIG.1